Europäisches Patentamt

European Patent Office

Office européen des brevets

(19)

(11) Publication number: **0 440 865 A1**

(12) # EUROPEAN PATENT APPLICATION

(21) Application number: **90102576.7**

(22) Date of filing: **09.02.90**

(51) Int. Cl.⁵: **H01B 3/00, H01B 3/30, H01K 3/30, H02K 3/40**

(43) Date of publication of application:
**14.08.91 Bulletin 91/33**

(84) Designated Contracting States:
**AT BE CH DE FR GB IT LI**

(71) Applicant: **ASEA BROWN BOVERI AB**

**S-721 83 Västeras(SE)**

(72) Inventor: **Hjortsberg, Arne**
**Solbrudsvägen 54**
**S-722 43 Västeras(SE)**
Inventor: **Holmström, Göran**
**Källhagsgatan 1 L**
**S-723 36 Västeras(SE)**
Inventor: **Johansson, Lennart**
**Vetterslundsgatan 2**
**S-724 62 Vaesteras(SE)**
Inventor: **Langberg, Lennart**
**Fornforskargatan 104**
**S-723 53 Västeras(SE)**

(74) Representative: **Boecker, Joachim, Dr.-Ing.**
**Rathenauplatz 2-8**
**W-6000 Frankfurt a.M. 1(DE)**

(54) **Electrical insulation.**

(57) An electrical insulation (14) comprises an organic polymer containing a powdered filler with parts with a thickness of more than 1 mm, which insulation is intended to be subjected to an electrical field strength of at least 0.5 kV/mm built up by an alternating voltage. The insulation contains a powdered filler in the form of chromium oxide ($Cr_2O_3$), iron oxide ($Fe_2O_3$), metal phthalocyanine, or a mixture of at least two substances of these kinds in such a content that the amount of the powdered filler constitutes at least 10% of the total volume of the organic polymer and the powdered filler. The electrical insulation may, inter alia, be arranged as an insulation (14) around conductor bundles (17) in coils for electrical machines, as insulation between conductor layers in layer-wound transformers, as insulation around core and windings in instrument transformers, as insulation between conductor and grounded casing in $SF_6$-insulated conductors, and as insulation between conductor and grounded screen in a cable.

FIG. 2

## ELECTRICAL INSULATION

The present invention relates to an electrical insulation comprising an organic polymer containing a powdered filler.

In relatively thick-walled insulations for high voltage equipment, such as in the form of many products of moulded resins, in the form of resin-impregnated windings of, for example mica tape, and in the form of many compression-moulded, injection-moulded or extruded parts of filler-containing resins, sensitivity to corona (partial discharges) constitutes a serious problem. In the manufacture of relatively thick-walled insulations using the methods mentioned, cavities and pores are easily formed therein, which result in internal corona when the insulations are subjected to high voltage stresses. The corona gradually erodes the material, which may lead to an electrical breakdown of the insulation. The insulations of the kind mentioned often contain powdered and fibrous fillers, such as, for example, aluminium oxide and chalk, and glass fibre, respectively.

The invention aims at developing an electrical insulation of the above-mentioned kind which exhibit a considerably increased resistance to internal electrical partial discharges.

To achieve this aim the invention suggests an electrical insulation according to the introductory part of claim 1, which is characterized by the features of the characterizing part of claim 1.

According to the invention, a sufficient quantity of at least one of the substances chromium oxide, iron oxide or metal phthalocyanine in powdered form is incorporated in the insulation.

A possible explanation of the favourable results obtained according to the invention may be that the corona in cavities and pores "sputters away" insulating polymer material from the surfaces of the cavities and pores, respectively. When using chromium oxide or iron oxide as filler, chromium oxide or iron oxide are then exposed on the surfaces of the cavities and the pores, respectively. Because of their lower resistivity the chromium oxide or iron oxide thus increases the electrical conductivity locally in the surface layer of the cavities and the pores, respectively, sufficiently for the extremely concentrated effect of a corona discharge to spread over a larger surface, its effects thus being effectively reduced. Also when using metal phthalocyanine, it is assumed that a corona discharge will spread over a larger surface. Owing to this process in cavities and pores, surrounding parts of the insulation are protected against the corona.

As examples of usable metal phthalocyanines may be mentioned phthalocyanines of copper, iron, nickel, cobalt, magnesium, aluminium, manganese, tin, chromium, and zinc, separately or in a mixture. Particularly preferred, among other things for economical reasons, is copper phthalocyanine, and then particularly α-copper phthalocyanine.

The chromium oxide, the iron oxide and the metal phthalocyanine, respectively, preferably have an intrinsic resistivity of $10^4$–$10^8$ ohm-m.

The filler-containing polymer preferably has a resistivity in excess of $10^{10}$ ohm-m.

The content of powdered filler in the form of chromium oxide, iron oxide, metal phthalocyanine, or a mixture of at least two substances of these kinds, preferably constitutes 10-40% of the total volume of organic polymer and this powdered filler.

The particle size of the filler mentioned in the preceding paragraph is suitably 0.005-30 $\mu$m and preferably 0.005-5 $\mu$m.

A particular advantage of chromium oxide is that it gives the film a corona resistance which is not, or only insignificantly, reduced by the influence of external factors, such as moisture.

A particular advantage of the phthalocyanine is that it gives the insulation a particularly low loss factor.

The organic polymer in the insulation may consist of different thermosetting resins and thermoplastic resins of such kinds as are conventionally used for the manufacture of insulations using standard forming methods such as casting, impregnation, compression moulding, injection moulding and extrusion. As examples of polymers which are particularly well suited for casting, impregnation and compression moulding may be mentioned curable epoxy resins, unsaturated polyester resins, polyurethane resins, acrylic resins and silicone resins. These curable resins are preferably used without a solvent in the case of casting and compression moulding and normally dissolved in a solvent in the case of impregnation. As examples of polymers which are particularly well suited for injection moulding and extrusion may be mentioned linear polymers such as polyimide, polycarbonate, polysulfone, including polyarylsulfone and polyethersulfone, polyetherimide, thermoplastic polyester such as polyethyleneglycol terephthalate and polybutyleneglycol terephthalate, polyethylene, copolymerisate of ethylene and propylene, or of ethylene and propylene with diene monomers such as dicyclopentadiene with double links remaining from the diene monomer molecules after the polymerization, and polyethylene and the mentioned copolymerisate which, after forming, are subjected to cross linking.

The organic polymer may contain, in addition to chromium oxide, iron oxide and/or metal phthalocyanine, fillers of conventional kind, in the following referred to as indifferent fillers, such as aluminium oxide, chalk, kaolin, dolomite, talcum, mica powder, quartz. The content of such indifferent fillers suitably amounts to 10-50% and preferably to 20-45% of the total volume of organic polymer and indifferent fillers. In addition, the organic polymer, especially when applying the invention to compression moulding with organic polymer in the form of a thermosetting resin, may contain a fibrous reinforcing material such as short fibres of glass, polyamide or carbon. The content of such fibrous reinforcing material, if used, suitably amounts to 1-20%, preferably to 5-15% of the total volume of organic polymer and fibrous filler.

Especially when applied to injection moulding and extrusion with an organic polymer in the form of a linear polymer, the organic polymer may contain conventional additives such as plasticizer, for example dioctylphthalate, peroxide (in case of cross linking), for example di-$\alpha$-cumyl peroxide, activator for the peroxide, for example triallylcyanurate, antioxidant, for example polymerized trimethyldihydro quinoline, and flame retardant, for example antimony trioxide.

As examples of high voltage equipment, which may advantageously be provided with an electrical insulation according to the present invention, the following may be mentioned.

- As main insulation in form-wound coils for electrical machines for an operating voltage of at least 2 kV. the insulation is then arranged around a bundle of a plurality of lengths, arranged side by side, of conductors of rectangular cross-section for insulation of the bundle against the walls of slots in a stator or rotor of the machine.
- As insulation between conductor layers in the winding of a layer-wound transformer or reactor for an operating voltage of at least 5 kV.
- As an insulation cast around at least part of the core and at least one of the windings in an instrument transformer for an operating voltage of at least 2 kV.
- As a solid insulation between a conductor for an operating voltage of at least 6 kV along part of the axial extension of the conductor and a grounded casing surrounding the conductor, which casing is filled with SF$_6$-gas, which, together with the solid insulation, insulates the conductor against the casing.
- As insulation between a conductor and a grounded screen in a cable for an operating voltage of at least 2 kV.

By way of example, the invention will now be described in greater detail with reference to the accompanying drawings showing in

Figure 1   a side view of a coil for an electrical machine with a main insulation according to the invention,

Figure 2   the coil of Figure 1 in cross-section,

Figure 3   a longitudinal section through a winding for a layer-wound transformer with an insulation according to the invention,

Figure 4   part of a section taken along line A-A in Figure 3,

Figure 5   an instrument transformer with a surrounding cast insulation according to the invention, partly in front view, partly in cross-section,

Figure 6   a cross-section of part of a conductor, insulated with SF$_6$-gas with a solid insulator in the form of an insulation according to the invention,

Figure 7   a cross-section of a high voltage cable with an insulation according to the invention.

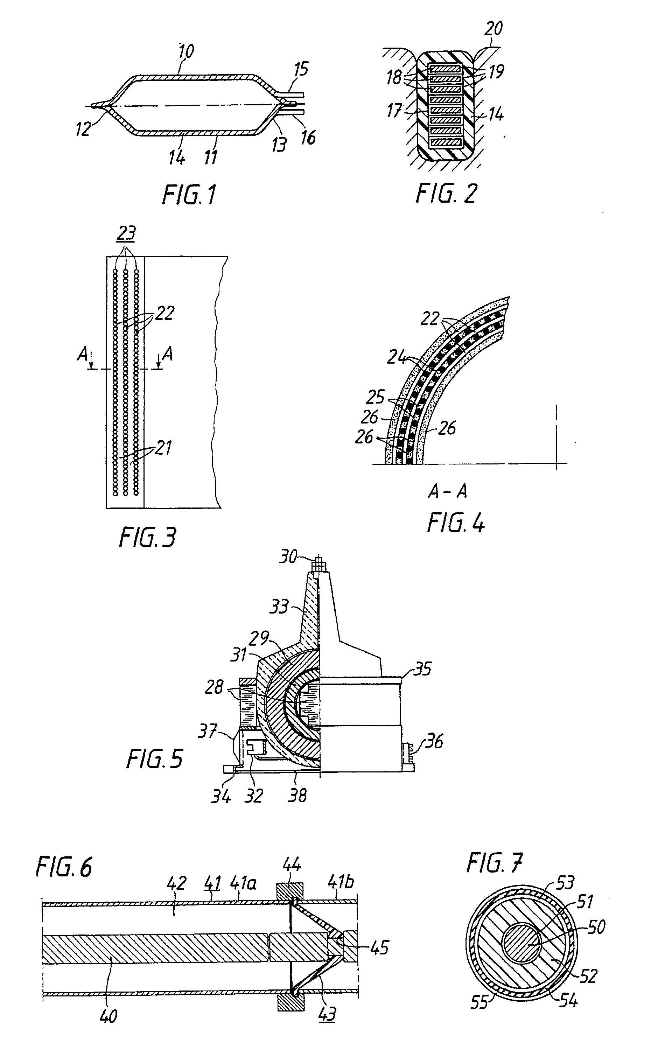

The coil according to Figure 1 has straight parts 10 and 11 intended to be placed in the stator slots of a high voltage machine, and bent end parts 12 and 13 extending outside the slots of the machine. The coil is provided with a main insulation 14 according to the invention. The coil's terminals are designated 15 and 16.

The coil according to Figure 1, as will be clear from Figure 2, comprises a bundle 17 of several individual conductors 18 arranged side by side, each conductor being provided with a conductor insulation 19. The slots of the machine are designates 20. The bundle 17 may consist of straight portions of several turns of one single conductor. The bundle 17 may also consist of several separate insulated conductors, usually called strands, which at their ends are electrically connected to each other, usually in parallel. The conductor insulation 19 may consist of only one enamel layer of such a type as is normally used for enamelling winding wire, such as a coating of epoxy resin, terephthalic acid alkyd, polyester imide, polyimide, polyamide imide, polyurethane, polysulfone, silicone, polyamide or a polymer based on polyhydantoin. The conductor insulation may also consist of a wrapping of glass yarn which is impregnated with such an enamel and which is then cured. Further, the conductor insulation may consist of a thin mica tape, wound or folded around the conductor, or a thin tape in the form of a film of a linear polymer such as polyimide, polycarbonate, polysulfone including polyarylsulfone and polyethersulfone, polyethermide, polyamide, polyamideimide, or polyethyleneglycol terephthalate. In the material used as conductor insulation, to counteract the occurrence of corona damage, there may be incorporated powdered chromium oxide ($Cr_2O_3$), iron oxide ($Fe_2O_3$), metal phthalocyanine, preferably copper phthalocyanine, or a mixture of at least two substances of these kinds in such an amount that the content of this powdered filler constitutes at least 10%, preferably 10-40%, of the total volume of this powdered filler and organic polymer contained in the conductor insulation, such as in the form of the mentioned enamel or the mentioned linear polymer. In an exemplified concrete case the conductor insulation consists of a wrapping of glass yarn impregnated with an epoxy resin to which chromium oxide ($Cr_2O_3$) has been added, which epoxy resin has thereafter been cured. The epoxy resin may consist of a polyamide-modified epoxy resin (such as AF-42 from Minnesota Mining and Manufacturing Company). The conductor insulation may have a thickness of 100 $\mu$m and contain 20 per cent by volume chromium oxide with a grain size of less than 5 $\mu$m. Instead of incorporating the mentioned filler chromium oxide, iron oxide or metal phthalocyanine into the polymer in the conductor insulation, the filler can be incorporated only in a protective layer protecting against corona damage applied on the surface of the enamel layer or on the outwardly-facing surface of that tape in the form of polymer film which is folded or wound around the conductor, the same content of the filler being used in the protective layer as has been stated above for the filler in the organic polymer of the conductor insulation. It is then suitable to use in the protective layer an organic polymer of the same kind as exemplified above as material in an enamel layer and which has been stated to be used normally for enamelling winding wire. As a concrete example of a conductor insulation with a protective layer may be mentioned a film of polyimide (e.g. Kapton® from Du Font), wound around the conductor, with a thickness of 75 $\mu$m, which film is provided on the outwardly-facing side with a protective layer of polyamide imide with a thickness of 25 $\mu$m and containing 25 per cent by volume chromium oxide ($Cr_2O_3$).

Around the conductor bundle, a micaceous main insulation 14 is arranged. It is built up by winding of an insulating tape with, for example, half an overlap. For example, this tape has a width of 25 mm and consists of an 0.09 thick self-supporting layer of small mica flakes overlapping each other and fixed to an 0.04 mm thick woven glass fibre tape with an 0.006 mm thick polyethylene glycol terephthalate film. When being fixed the film partially melts and accumulates at contact surfaces between mica tape and glass fibre threads. Such an insulating tape is described in Swedish Patent 200 820. When the bundle has been provided with a wrapping of, for example, twenty layers of the mica tape, one layer located above the other, the winding is first evacuated at a pressure of 0.1 mm Hg and at a temperature of 40°C, whereupon an impregnating resin containing copper phthalocyanine with a grain size of below 0.1 $\mu$m is supplied at the pressure mentioned for impregnation of the wrapping. When all resin has been supplied, the pressure is increased to, for example, 10 kp/cm². The resin may consist of 100 parts by weight of an epoxy resin, which is manufactured in a manner known per se from epichlorhydrin and 4.4'-dioxydiphenyl dimethylmethane and which has an epoxy equivalent of 192, and 100 parts by weight of a curing agent consisting of a mixture of 75 parts by weight hexahydrophthalic acid anhydride and 25 parts by weight tetrahydrophthalic acid anhydride. The volume of copper phthalocyanine in the resin amounts to 30% of the total volume of copper phthalocyanine and resin. Upon the impregnation, resin with copper phthalocyanine penetrates into spaces between the mica layers and into the mica layers themselves. In order for the resin not to penetrate out of the insulation during the subsequent curing operation, the impregnated conductor bundle with the mica tape wrapping may be surrounded by a sealing tape of polytetrafluoro ethylene or the like. The coil is then placed in a moulding tool for curing the resinous material. The curing is performed at a temperature of about 160°C for a period of 10 hours. In the finished coil, mica constitutes 27%, resin 45%, copper phthalocyanine 20% and glass fibre 8% of the total volume of the main insulation.

The solid insulating material in the main insulation may be impregnated with the impregnating resin either after the insulating material in the form of a wrapping has been applied around the conductor bundle, as recently described, or before the solid insulating material is applied around the conductor bundle to form a wrapping. In the former case the powdered filler is supplied to the impregnating resin prior to the impregnation. In the latter case the filler can be supplied before or after the impregnation. When supplying it after impregnation, the filler may, for example, be applied as a surface layer on the impregnated insulating material before it is formed into a wrapping around the conductor bundle.

Thus, in the manufacture of a coil according to Figures 1 and 2, the copper phthalocyanine and the impregnating resin, when applying the latter method, may be supplied to the mica tape before the winding of the tape around the conductor bundle 17, either by impregnating the tape with the resin containing copper phthalocyanine or by impregnating the tape with only the impregnating resin and coating the surface of the impregnated tape with copper phthalocyanine. The impregnating resin may then consist of 100 parts by weight of epoxynovolak "DEN 438" (Dow Chemical Co.) and 3 parts by weight of the boron trifluoride complex "HZ 935 J50" (Ciba Geigy AG). The amount of copper phthalocyanine may constitute 20% of the total volume of resin and copper phthalocyanine. The tape is wound around the conductor bundle 17 with half an overlap into thirty layers located one above the other to form the main insulation 14. The coil is then placed in a moulding tool for curing the resin at a temperature of 160° C for a period of 8 hours. This causes the filler, together with the resin, to penetrate into and fill up all the spaces in the insulation 14. In the finished coil, mica constitutes 27%, resin 52%, copper phthalocyanine 13% and glass fibre 8% of the total volume of the main insulation.

Instead of using an insulating tape with mica in the two cases exemplified above, it is possible to use an insulating tape without mica, such as a woven glass fibre tape. When using an 0.2 mm thick woven glass fibre tape instead of mica tape in the above two exemplified cases, but otherwise using the same procedure, resin will constitute 70%, copper phthalocyanine 23% and glass fibre 7% of the total volume of the main insulation.

Although many epoxy resins as well as unsaturated polyester resins suited for impregnation of form-wound coils are known, some additional examples of such resins will be mentioned. Thus, there may be used, for example, a polyester resin consisting of 60 parts by weight of a reaction product of 3 moles maleic acid anhydride, 1 mole adipic acid and 4.4 moles ethylene glycol with an acid value of 30, and of 40 parts by weight diallylphthalate and containing 0.75% benzoyl peroxide and a polyester resin consisting of 70 parts by weight of a reaction produce of 1 mole fumaric acid, 1 mole phthalic acid and 2.2 moles propylene glycol with an acid value of 25, and of 30 parts by weight monostyrene and containing 0.5% benzoyl peroxide, as well as an epoxy resin consisting of 100 parts by weight "Epon 828" (Shell Chemical Co.) and 65 parts hexahydrophthalic acid anhydride, an epoxy resin consisting of 85 parts by weight "Araldit F", 100 parts by weight "Curing Agent 905" (both from Ciba Geigy AG, Switzerland) and 15 parts by weight phenylglycidyl ether or an epoxy resin consisting of 100 parts by weight "Dow 331" (Dow Chemical Co.) and 65 parts by weight tetrahydrophthalic acid anhydride.

Figures 3 and 4 show a high voltage layer-wound winding for a transformer. In these figures 21 designates a spacer between the conductors 22 in the form of copper wire. The conductors are wound close to each other, in the axial direction, in layers 23. The spacers which keep the conductors at the intended distance from each other in the radial direction may consist of elongated impregnable elements 24, for example glass fibre roving, which form between them channels 25. Alternatively, the elements 24 may consist of a voidless line or rod of a linear polymer such as polyamide. The winding is impregnated with and cast into a filler-containing resin 26 so as to fill up all the voids in the winding including the impregnable elements 24 when using such elements. As impregnating resin there is used a solvent-free resin such as an epoxy resin, an unsaturated polyester resin, or a polyurethane resin. The resin, for example an epoxy resin consisting of 100 parts by weight of a resin of bisphenol type (e.g. Araldit F from Ciba AG), 100 parts by weight curing agent of anhydride type (e.g. HY 905 from Ciba AG) and 1 part by weight amine accelerator (e.g. DY 061 from Ciba AG), contains copper phthalocyanine with a grain size of less than 0.1 μm and quartz powder with a grain size of less than 500 μm so that the content of copper phthalocyanine constitutes 15% of the total volume of copper phthalocyanine and epoxy resin and the content of quartz powder 20% of the total volume of quartz powder and epoxy resin. In an analogous manner, a winding for a transformer, which in a known manner is built up of tape, usually aluminium tape, instead of threads 22 may be impregnated and surrounded with a cast resin. In the same way as has been describes for the manufacture of form-wound coils for electrical machines, it is also possible to use an insulating tape, for example a glass fibre tape, pre-impregnated with the filler-containing resin, which tape is impregnated with the epoxy resin just mentioned and containing copper phthalocyanine and quartz powder to make an insulation 26 (Fig. 4) of the mentioned kind for a layer-wound transformer, whether the conductors in each layer consist of a plurality of turns, arranged side-by-side, of a wire-formed conductor or of a tape-formed conductor having the corresponding extent. Layers of conductors, for example tapes of aluminium of approximately the same width as the length of the winding in the axial direction, and an intermediate insulation are then wound alternately on top of each other until the intended geometry of the winding has been attained, whereafter the resin in the insulation is cured.

Figure 5 shows an instrument transformer in the form of a voltage transformer with an iron core 28, a primary winding 29, terminals for the primary winding 30, a secondary winding 31, terminals for the secondary winding 32, an insulation 33, an outer casing 34, a clamping frame 35, a ground connection 36 and covering lids 37 and 38. The insulation 33 is cast around the central part of the core and around the primary and secondary windings. The insulation 33 may consist of a material of the same kind as that used in the insulation 26 in the transformer according to Figures 3 and 4. In an instrument transformer in the form of a current transformer, the core in its entirety and the secondary winding only may be cast into an insulation of the stated kind, whereas the primary winding is located outside.

Figure 6 shows a high voltage conductor which may be used, inter alia, in a connecting line between a transformer and static convertor valve units in a static convertor station in a plant for power transmission by means of high voltage direct current. The device of Figure 6 comprises a conductor 40 and a grounded casing 41 in the form of a tube which surrounds the conductor. In the shown part of the connecting line, two casing tubes 41a and 41b make contact with each other at their end surfaces. Along the main portion of its extension, the conductor is insulated from the casing by pressurized $SF_6$-gas arranged in the space 42, and along part of its extension by a solid insulator 43 arranged between the conductor and the casing, or by several such insulators. The insulator is sealingly fixed to the casing by a ring 44 and supports the conductor via a central hole 45.

The solid insulator may, for example, be manufactured from a resin consisting of 100 parts by weight of an epoxy resin of bisphenol A-type and containing 5.15-5.5 moles epoxy groups per kilogram (e.g. CY 205 from Ciba Geigy, Switzerland), 80 parts by weight methyltetrahydrophthalic acid anhydride and 1 part by weight benzyldimethyl amine, to which have been added copper phthalocyanine with a grain size of less than 0.1 $\mu$m and aluminium oxide powder with a grain size of 0-100 $\mu$m and a mean grain size of 15 $\mu$m, so that the content of copper phthalocyanine constitutes 30% of the total volume of epoxy resin and copper phthalocyanine and the content of aluminium oxide 10% of the total volume of epoxy resin and aluminium oxide. Curing of the resin may be carried out by gelling at 150°C for 45 minutes.

Instead of epoxy resin, an acrylic resin may, inter alia, be used which is manufactures from 100 parts by weight decylmethacrylate, 5 parts 1-4 butanediol dimethacrylate and 1 part benzoyl peroxide, which can be cured at 50°C for 3 hours, or an unsaturated polyester resin consisting of a reaction product of 1 mole isophthalic acid, 0.5 mole adipic acid, 0.5 mole maleic acid, and 2.2 mole propylene glycol, to which have been added 30 per cent by weight styrene and 1 per cent by weight benzoyl peroxide. The resin can be cured at 130°C for 3 hours. The manufacture of the solid insulator may take place by casting or compression moulding.

Figure 7 shows a high voltage cable. In this the conductor 50 is surrounded in conventional manner by, respectively, an inner semiconducting layer 51, an extruded insulation 52, an outer semiconducting layer 53, a screen 54 of metal, which is normally grounded, and a sheath 55 of polymer material, for example PVC.

The extruded insulation 52 may, for example, be of polyethylene, a copolymerisate of ethylene and propylene or of ethylene and propylene with a diene monomer, in non-cross-linked or cross-linked form. As a concrete example may be mentioned a cross-linked insulation manufactured from 100 parts by weight LD polyethylene with a melting index of 0.2-20, 2 parts by weight di-$\alpha$-cumyl peroxide, 0.2 parts by weight polymerized trimethyl dihydroquinoline (antioxidant) and copper phthalocyanine with a grain size of less than 0.1 $\mu$m in such an amount that the copper phthalocyanine constitutes 10% of the total volume of polymer and copper phthalocyanine. The extrusion may take place at 120°C and the cross linking at 215°C.

In the examples given the copper phthalocyanine may be replaced completely or partially by other metal phthalocyanines such as nickel, cobalt or iron phthalocyanine, as well as by chromium oxide ($Cr_2O_3$) and iron oxide ($Fe_2O_3$) or mixtures of at least two of all the substances mentioned above.

## Claims

1. An electrical insulation (14, 26, 33, 43, 52) comprising an organic polymer containing a powdered filler with parts with a thickness of more than 1 mm, which insulation is subjected to an electrical field strength of at least 0.5 kV/mm built up by an alternating voltage, **characterized** in that the insulation contains a powdered filler consisting of chromium oxide ($Cr_2O_3$), iron oxide ($Fe_2O_3$), metal phthalocyanine or a mixture of at least two substances of these kinds in such a content that the amount of the powdered filler constitutes at least 10% of the total volume of the organic polymer and this filler.

2. An electrical insulation according to claim 1, **characterized** in that the metal phthalocyanine consists of copper phthalocyanine.

3. An electrical insulation according to claim 1 or 2. **characterized** in that the powdered filler in the insulation has an intrinsic resistivity of $10^4$-$10^8$ ohm-m.

4. An electrical insulation according to any of the preceding claims, **characterized** in that the filler-containing polymer has a resistivity in excess of $10^{10}$ ohm-m.

5. An electrical insulation according to any of the preceding claims, **characterized** in that the content of powdered filler in the form of chromium oxide, iron oxide, metal phthalocyanine or a mixture of at least two substances of these kinds constitutes 10-40% of the total volume of organic polymer and this powdered filler.

6. An electrical insulation according to any of the preceding claims, **characterized** in that it (14) is arranged around a bundle (17) of a plurality of lengths, arranged side-by-side, of conductors of rectangular cross-section for insulating the bundle against the walls of a slot (20) in a stator or rotor of an electrical machine, in which the bundle with the surrounding insulation is intended to be arranged.

7. An electrical insulation according to any of claims 1-5, **characterized** in that it (26) is arranged between conductor layers (22) in a layer-wound transformer or reactor.

8. An electrical insulation according to any of claims 1-5, **characterized** in that it (33) is arranged in the form of a cast polymer cast around at least part of the core (28) and at least one of the windings (29, 31) in an instrument transformer.

9. An electrical insulation according to any of claims 1-5, **characterized** in that it (43) is arranged between a conductor (40) and a grounded casing (41) along part of the axial extension of the conductor, said casing surrounding the conductor and being filled with $SF_6$-gas, which together with the insulation insulates the conductor from said casing.

10. An electrical insulation according to any of claims 1-5, **characterized** in that it (52) is arranged in a cable between a conductor (50) and a surrounding grounded screen (54).

11. An electrical insulation according to any of claims 1-9, **characterized** in that the organic polymer consists of a thermosetting resin transferred into cured state.

12. An electrical insulation according to any of claims 1-5 and 10, **characterized** in that the organic polymer constitutes a linear polymer.

13. An electrical insulation according to claim 12, **characterized** in that the linear polymer is cross-linked.

FIG.1

FIG. 2

FIG.3

A - A

FIG. 4

FIG.5

FIG. 6

FIG. 7

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| E | DATABASE DERWENT WORLD PATENT INDEX, accession no. 90-176468, Derwent Publications Ltd, London, GB; & SE-A-88 03 025 (ASEA) * Abstract * | 1-13 | H 01 B 3/00<br>H 01 B 3/30<br>H 01 K 3/30<br>H 02 K 3/40 |
| E | EP-A-0 356 929 (ASEA) * The whole document * | 1-13 | |
| E | EP-A-0 356 928 (ASEA) * The whole document * | 1-13 | |
| X | EP-A-0 287 814 (ASEA) * The whole document * | 1,3-13 | |
| X | EP-A-0 287 813 (ASEA) * The whole document * | 1,3-13 | |
| X | DE-A-3 634 946 (ASEA) * The whole document * | 1,3-13 | |
| A | DATABASE DERWENT WORLD PATENT INDEX, accession no. 89-013940, Derwent Publications Ltd, London, GB; & SE-A-87 1215 (ASEA) | 1,3-13 | TECHNICAL FIELDS SEARCHED (Int. Cl.5)<br><br>H 01 B 3<br>H 01 K 3<br>H 02 K 3 |

The present search report has been drawn up for all claims

| Place of search | Date of completion of the search | Examiner |
|---|---|---|
| THE HAGUE | 16-10-1990 | DROUOT M.C. |